# EUROPEAN PATENT SPECIFICATION

(11) **EP 2 843 217 B1**
(45) Date of publication and mention of the grant of the patent: **08.05.2019**
(21) Application number: 14177419.0
(22) Date of filing: 17.07.2014
(51) Int. Cl.: F02D 41/08, B62H 1/02, B60W 10/06

(54) **Vehicle electronic control unit**
Elektronische Fahrzeugsteuerungseinheit
Unité de commande électronique de véhicule

(30) Priority: 27.08.2013 JP 2013175812
(43) Date of publication of application: 04.03.2015
(73) Proprietor: Keihin Corporation, Tokyo 163-0539 (JP)
(72) Inventor: Sugimori, Shigehiko, Tochigi, 3291233 (JP); Akimoto, Yutaka, Tochigi, 3291233 (JP)
(74) Representative: Weickmann & Weickmann PartmbB

(56) References cited:
- FR-A1- 2 712 239
- JP-A- 2001 270 481
- JP-A- 2005 163 669
- JP-A- 2008 019 758
- JP-A- 2012 081 947

## Description

### BACKGROUND OF THE INVENTION

The present invention relates to a vehicle electronic control unit, and more particularly relates to a vehicle electronic control unit included in a saddle-ride type vehicle that has a belt-type continuously variable transmission and a centrifugal clutch for transmitting a driving force of an engine to a driving wheel.

In recent years, a belt-type continuously variablee transmission including a centrifugal clutch as a start clutch such as that disclosed in Japanese Patent Application Laid-open Publication No. H09-287640 is known as a transmission of a saddle-ride type vehicle such as a scooter or a moped.

In the centrifugal clutch, when the rotational speed of the engine increases with opening of a throttle valve according to an accelerator operation of a driver, a clutch shoe abuts onto the inner circumference of a clutch outer against a clutch spring because of a centrifugal force, whereby the clutch is connected. The centrifugal clutch eliminates the need of a clutch operation by the driver and thus the driver can drive a saddle-ride type vehicle easily.

Generally, the saddle-ride type vehicle is enabled to stand by itself and be parked by supporting the saddle-ride type vehicle with a side stand or a center stand. Particularly, many of scooter-type saddle-ride type vehicles are enabled to stand by themselves and be parked by supporting the saddle-ride type vehicles with the center stand. When the saddle-ride type vehicle is supported with the center stand, supporting points that support the saddle-ride type vehicle are any of front and rear wheels and both legs of the center stand. In other words, in the saddle-ride type vehicle, either a support with the front wheel and the center stand or a support with the rear wheel and the center stand is used.

JP 2008-019758 A discloses a vehicle electronic control unit in accordance with the preamble of claim 1.

### SUMMARY OF THE INVENTION

However, according to the studies by the present inventors, there is a case where the driver rides on a saddle-ride type vehicle, starts the engine, and performs so-called "racing" to operate an accelerator operating member unnecessarily in an opening direction in a state where the saddle-ride type vehicle is parked with the center stand. At this time, when the vehicle is supported with the front wheel and the center stand in the saddle-ride type vehicle having a belt-type continuously variablee transmission including a centrifugal clutch, the centrifugal clutch becomes a connected state with an increase in the rotational speed of the engine due to idling and thus the rear wheel separated from the road surface is driven. If the driver intends to release the support with the front wheel and the center stand in this state to start the saddle-ride type vehicle, the driven rear wheel comes in contact with the road surface and the saddle-ride type vehicle may undesirably start.

Furthermore, according to the studies by the present inventors, it is conceivable that the ignition timing of the engine is delayed to suppress such an increase in the rotational speed of the engine due to idling. However, if the ignition timing of the engine is delayed, the temperature of a combustion chamber increases and, in a case where the saddle-ride type vehicle is stopped, a cooling effect of a catalyst provided by a traveling wind is not expected, which may deteriorate the catalyst.

The present invention has been achieved in view of the above studies, and an object of the present invention is to provide a vehicle electronic control unit that can suppress a sudden start of a saddle-ride type vehicle or a deterioration of a catalyst.

To achieve the above object, the present invention provides a vehicle electronic control unit included in a saddle-ride type vehicle having a belt-type continuously variable transmission and a centrifugal clutch for transmitting a driving force of an engine to a driving wheel in accordance with claim 1.

In a first aspect, the vehicle electronic control unit comprisies: an electronic-control throttle control unit that calculates a target throttle opening degree based on an output of an accelerator opening degree sensor and executes a feedback control to cause an opening degree of a throttle valve to match the target throttle opening degree; and a stand-state detection unit that detects a working state of a stand for supporting the saddle-ride type vehicle, wherein the electronic-control throttle control unit regulates the target throttle opening degree to cause a rotational speed of the engine to fall within a range of a rotational speed that enables the centrifugal clutch to keep a disconnected state when the working state of the stand detected by the stand-state detection unit is a standing state supporting the saddle-ride type vehicle.

According to a second aspect of the present invention, in addition to the first aspect, in a case where the working state of the stand detected by the stand-state detection unit is the standing state, the electronic-control throttle control unit drives the throttle valve to set a change rate of an actual throttle opening degree with respect to an output change rate of the accelerator opening degree sensor to be slow when the throttle valve is driven to an opening side, and drives the throttle valve to set the change rate of the actual throttle opening degree to a rate corresponding to the output change rate of the accelerator opening degree sensor when the throttle valve is driven to a closing side.

According to a third aspect of the present invention, in addition to the first or the second aspect, in a case where the working state of the stand detected by the stand-state detection unit changes from the standing state to a retracting state not supporting the saddle-ride type vehicle, the electronic-control throttle control unit gradually relaxes a regulation on the target throttle opening degree of a time when the working state of the stand detected by the stand-state detection unit is the standing state.

According to a fourth aspect of the present invention, in addition to any of the first to the third aspects, the electronic-control throttle control unit cancels the regulation on the target throttle opening degree when the stand-state detection unit cannot detect the working state of the stand.

According to a fifth aspect of the present invention, in addition to any of the first to the fourth aspects, a regulation opening degree that regulates the target throttle opening degree is set to change according to a temperature of the engine.

In the vehicle electronic control unit according to the first aspect of the present invention, the electronic-control throttle control unit regulates the target throttle opening degree to cause a rotational speed of the engine to fall within a range of a rotational speed that enables the centrifugal clutch to keep a disconnected state when the state of the stand is a standing state. Therefore, a sudden start of the saddle-ride type vehicle or a deterioration of a catalyst can be suppressed. Furthermore, a situation in which a driver suspects that a failure is occurring in the throttle valve can be suppressed more than in a case where a regulation not to drive the throttle valve is imposed.

In the vehicle electronic control unit according to the second aspect of the present invention, in a case where the state of the stand is the standing state, the electronic-control throttle control unit drives the throttle valve to set a change rate of an actual throttle opening degree with respect to an output change rate of the accelerator opening degree sensor to be slow when the throttle valve is driven to an opening side, and drives the throttle valve to set the change rate of the actual throttle opening degree to a rate corresponding to the output change rate of the accelerator opening degree sensor when the throttle valve is driven to a closing side. Therefore, even when the throttle valve is driven to the opening side in a case where the state of the stand is the standing state, an unnecessary connection of the centrifugal clutch can be suppressed.

In the vehicle electronic control unit according to the third aspect of the present invention, in a case where the state of the stand changes from the standing state to a retracting state, a regulation on the target throttle opening degree of a time when the state of the stand is the standing state is gradually relaxed. Therefore, an unnecessary rapid acceleration of the saddle-ride type vehicle can be suppressed.

In the vehicle electronic control unit according to the fourth aspect of the present invention, the regulation on the target throttle opening degree is canceled when the state of the stand cannot be detected. Therefore, it is possible to suppress a situation where the saddle-ride type vehicle cannot be started under a circumstance in which whether the stand is standing or the stand-state detection unit is broken cannot be accurately determined.

In the vehicle electronic control unit according to the fifth aspect of the present invention, a regulation opening degree that regulates the target throttle opening degree is set to change according to the temperature of the engine. Therefore, an unnecessary connection of the centrifugal clutch caused by a reduction in a friction of the engine or the centrifugal clutch with a reduction in viscosities of oils and fats can be suppressed.

### BRIEF DESCRIPTION OF THE DRAWINGS

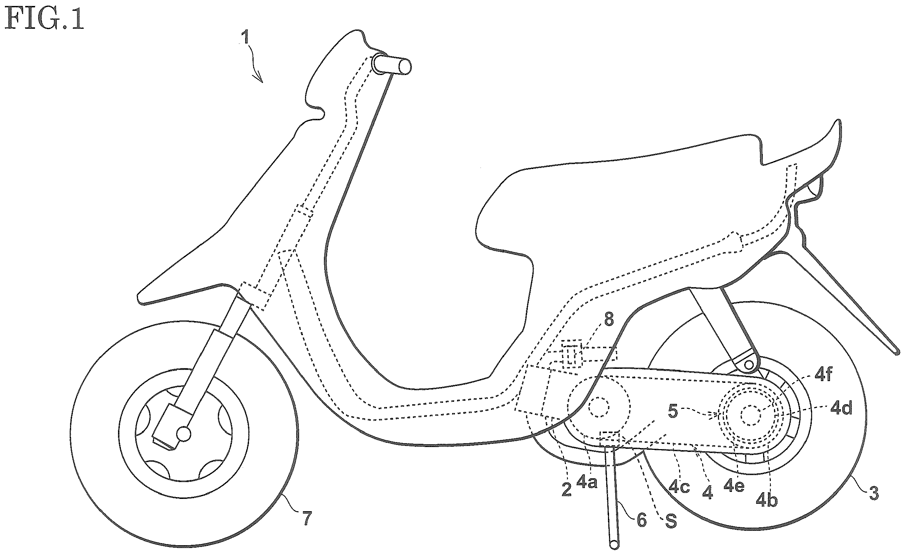

FIG. 1 is a schematic diagram showing a configuration of a saddle-ride type vehicle to which a vehicle electronic control unit according to an embodiment of the present invention is applied;

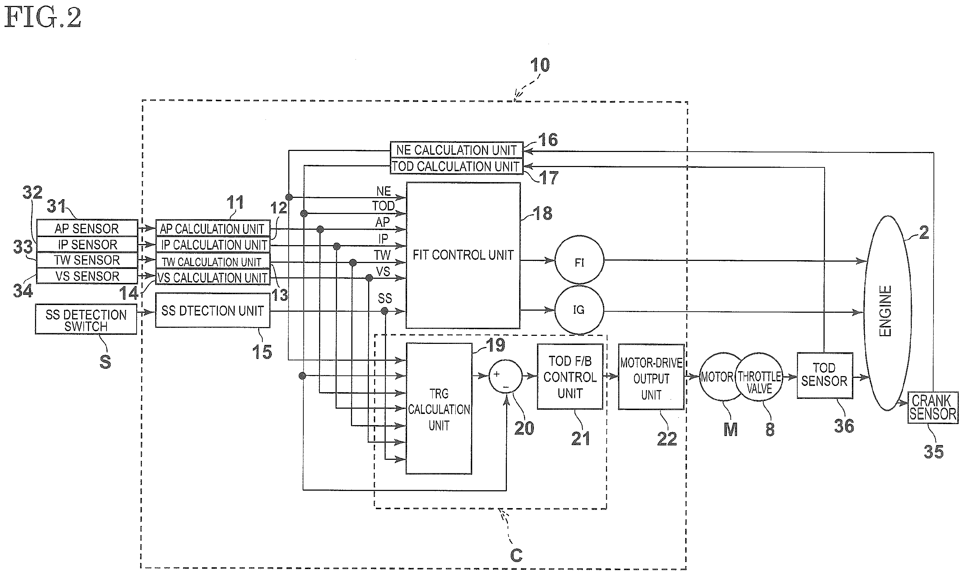

FIG. 2 is a block diagram showing a configuration of the vehicle electronic control unit according to the present embodiment;

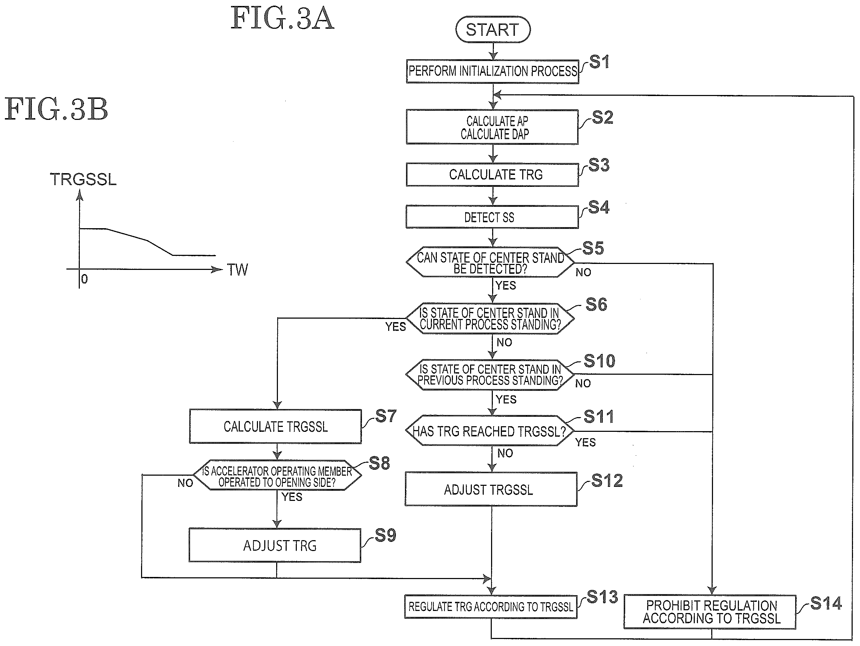

FIG. 3A is a flowchart showing a flow of a throttle-opening-degree control process performed by the vehicle electronic control unit according to the present embodiment, and FIG. 3B is a control map showing a relation between engine temperatures that can be used in the flowchart of FIG. 3A and regulation opening degrees TRGSSL of a target throttle opening degree for suppressing an engine rotational speed within a predetermined range; and

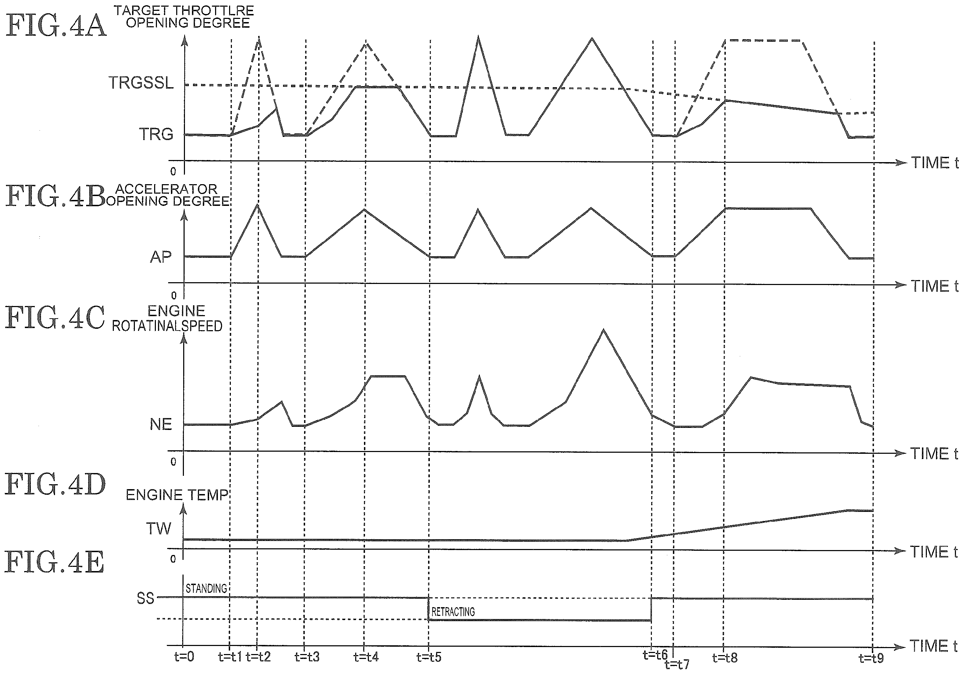

FIGS. 4A to 4E are timing charts for explaining a flow of a throttle-opening-degree control process performed by the vehicle electronic control unit according to the present embodiment, where FIG. 4A shows changes with respect to a time axis in a target throttle opening degree TRG and a regulation opening degree TRGSSL thereof, FIG. 4B shows changes with respect to a time axis in an accelerator opening degree AP, FIG. 4C shows changes with respect to a time axis in an engine rotational speed NE, FIG. 4D shows changes with respect to a time axis in an engine temperature TW, and FIG. 4E shows changes with respect to a time axis in a working state SS of a center stand.

### DETAILED DESCRIPTION OF THE PREFERRED EMBODIMENT

A vehicle electronic control unit according to an embodiment of the present invention is explained below in detail with reference to the accompanying drawings.

### [Configuration of saddle-ride type vehicle]

A configuration of a saddle-ride type vehicle to which the vehicle electronic control unit according to the present embodiment is applied is explained first in detail with reference to FIG. 1.

FIG. 1 is a schematic diagram showing a configuration of a saddle-ride type vehicle to which the vehicle electronic control unit according to the present embodiment is applied.

As shown in FIG. 1, a saddle-ride type vehicle 1 to which the vehicle electronic control unit according to the present embodiment is applied includes a be It-type continuously variable transmission 4 that transmits a driving force of an engine 2 to a rear wheel 3 serving as a driving wheel, and a centrifugal clutch 5 serving as a start clutch.

The belt-type continuously variable transmission 4 includes a pulley 4a on the side of the engine 2, a pulley 4b on the side of the rear wheel 3, a drive belt 4c that is wound between the pulleys 4a and 4b and transmits a driving force of the engine 2 from the pulley 4a to the pulley 4b, a drive plate 4d that is fixedly installed to the pulley 4b on the side of the rear wheel 3 and elastically supports a weight locking unit on the outer peripheral edge, a clutch outer 4e that covers an outer circumferential side of the drive plate 4d while moving closer thereto, and a drive shaft 4f that is fixedly installed on the clutch outer 4e and transmits the driving force to the rear wheel 3. The constituent elements of the drive plate 4d and the clutch outer 4e correspond to the centrifugal clutch 5.

Specifically, the winding diameters of the drive belt 4c around the pulleys 4a and 4b can change continuously according to the speed of the saddle-ride type vehicle 1 (vehicle speed) and, by changing the winding diameters around the pulleys 4a and 4b in this way, gear shifting of the belt-type continuously variable transmission 4 is achieved. In the centrifugal clutch 5, when the engine 2 is not started or, even if the engine 2 is started and a driving force of the engine 2 is transmitted to the drive plate 4d via the drive belt 4c to rotate the drive plate 4d, when the rotational speed of the drive plate 4d is lower than a predetermined threshold, the weight locking unit of the drive plate 4d is kept separated from a reception part of the clutch outer 4e that covers the outer circumferential side of the drive plate 4d while moving closer thereto and is not locked with the reception part. Accordingly, the centrifugal clutch 5 is in a disconnected state in which the driving force is not transmitted to the rear wheel 3. When the engine 2 is started and the driving force of the engine 2 is transmitted to the drive plate 4d via the drive belt 4c, the drive plate 4d is rotated and then, when the rotational speed of the drive plate 4d becomes equal to or higher than the predetermined threshold, the attitude of the weight locking unit changes against an elastic support force mainly due to the inertial force and the weight locking unit is locked with the reception part of the clutch outer 4e, so that the centrifugal clutch 5 becomes a connected state. Accordingly, the driving force of the engine 2 is transmitted to the rear wheel 3 via the drive shaft 4f.

That is, when the rotational speed of the engine 2 is suppressed within a predetermined range to enable to keep the rotational speed of the drive plate 4d of the centrifugal clutch 5 lower than the predetermined threshold, the centrifugal clutch 5 can be kept in the disconnected state.

The saddle-ride type vehicle 1 further includes a center stand 6. By turning the working state of the center stand 6 from a retracting state to a standing state where the center stand 6 is turned down, the rear wheel 3 serving as the driving wheel is separated from the ground surface and the saddle-ride type vehicle 1 is supported with the center stand 6 and a front wheel 7, whereby the saddle-ride type vehicle 1 is enabled to stand by itself and be parked.

### [Configuration of vehicle electronic control unit]

A configuration of the vehicle electronic control unit according to the present embodiment is next explained in detail with reference to FIG. 2.

FIG. 2 is a block diagram showing a configuration of the vehicle electronic control unit according to the present embodiment.

As shown in FIG. 2, a vehicle electronic control unit 10 according to the present embodiment is an arithmetic computation processing unit such as a microcomputer mounted on the saddle-ride type vehicle 1 shown in FIG. 1 and having a CPU (Central Processing Unit), a memory, and the like (which are not shown), and is typically an ECU (Electronic Control Unit) . The vehicle electronic control unit 10 reads necessary control programs and control data from the memory and executes control programs for a throttle opening-degree control process and the like.

Specifically, the vehicle electronic control unit 10 includes an accelerator-opening-degree calculation unit (AP calculation unit abbreviated in FIG. 2) 11, an intake-pressure calculation unit (IP calculation unit abbreviated in FIG. 2) 12, an engine-temperature calculation unit (TW calculation unit abbreviated in FIG. 2) 13, a vehicle-speed calculation unit (VS calculation unit abbreviated in FIG. 2) 14, a center-stand-state detection unit (SS detection unit abbreviated in FIG. 2) 15, an engine-rotational-speed calculation unit (NE calculation unit abbreviated in FIG. 2) 16, a throttle-opening-degree calculation unit (TOD calculation unit abbreviated in FIG. 2) 17, a fuel-ignition-timing control unit (FIT control unit abbreviated in FIG. 2) 18, a target throttle-opening-degree calculation unit (TRG calculation unit abbreviated in FIG. 2) 19, a deviation calculation unit 20, a throttle-opening-degree feedback (F/B) control unit (TOD F/B control unit abbreviated in FIG. 2) 21, and a motor-drive output unit 22. These constituent elements can be realized as functional blocks of the CPU or as electric circuits in the vehicle electronic control unit 10. The target throttle-opening-degree calculation unit 19, the deviation calculation unit 20, and the throttle-opening-degree F/B control unit 21 constitute an electronic-control throttle control unit C.

The accelerator-opening-degree calculation unit 11 calculates an accelerator opening degree and an amount of change thereof based on an output signal from an accelerator opening degree sensor (AP sensor abbreviated in FIG. 2) 31 and outputs a signal indicating the accelerator opening degree and the calculated amount of change thereof to the fuel-ignition-timing control unit 18 and the target throttle-opening-degree calculation unit 19.

The intake-pressure calculation unit 12 calculates a pressure of intake air (an intake pressure) based on an output signal from an intake pressure sensor (IP sensor abbreviated in FIG. 2) 32 and outputs a signal indicating the calculated intake pressure to the fuel-ignition-timing control unit 18 and the target throttle-opening-degree calculation unit 19.

The engine-temperature calculation unit 13 calculates a temperature of the engine 2 based on an output signal from an engine temperature sensor (TW sensor abbreviated in FIG. 2) 33 and outputs a signal indicating the calculated temperature of the engine 2 to the fuel-ignition-timing control unit 18 and the target throttle-opening-degree calculation unit 19.

The vehicle-speed calculation unit 14 calculates a vehicle speed of the saddle-ride type vehicle 1 based on an output signal from a vehicle speed sensor (VS sensor abbreviated in FIG. 2) 34 and outputs a signal indicating the calculated vehicle speed to the fuel-ignition-timing control unit 18 and the target throttle-opening-degree calculation unit 19.

The center-stand-state detection unit 15 detects a working state (the standing state or the retracting state) of the center stand 6 shown in FIG. 1 based on an output signal from a center-stand-state detection switch (SS detection switch abbreviated in FIG. 2) S and outputs a signal indicating the working state of the detected center stand 6 to the fuel-ignition-timing control unit 18 and the target throttle-opening-degree calculation unit 19.

The engine-rotational-speed calculation unit 16 calculates a rotational speed of the engine 2 based on an output signal from a crank sensor 35 and outputs a signal indicating the calculated rotational speed of the engine 2 to the fuel-ignition-timing control unit 18 and the target throttle-opening-degree calculation unit 19.

The throttle-opening-degree calculation unit 17 calculates an opening degree of a throttle valve 8 provided in an intake system of the engine 2 shown in FIG. 1 (an actual throttle opening degree) based on an output signal from a throttle opening degree sensor (TOD sensor abbreviated in FIG. 2) 36 and outputs a signal indicating the calculated actual throttle opening degree to the fuel-ignition-timing control unit 18, the target throttle-opening-degree calculation unit 19, and the deviation calculation unit 20.

The fuel-ignition-timing control unit 18 controls a fuel injection system FI and an ignition system IG based on the signals input from the accelerator-opening-degree calculation unit 11, the intake-pressure calculation unit 12, the engine-temperature calculation unit 13, the vehicle-speed calculation unit 14, the center-stand-state detection unit 15, the engine-rotational-speed calculation unit 16, and the throttle-opening-degree calculation unit 17, thereby controlling a fuel supply operation to the engine 2 and an ignition operation of the engine 2.

The target throttle-opening-degree calculation unit 19 calculates a target opening degree of the throttle valve 8 (a target throttle opening degree) appropriately based on the input signals from the accelerator-opening-degree calculation unit 11, the intake-pressure calculation unit 12, the engine-temperature calculation unit 13, the vehicle-speed calculation unit 14, the center-stand-state detection unit 15, the engine-rotational-speed calculation unit 16, and the throttle-opening-degree calculation unit 17.

The target throttle-opening-degree calculation unit 19 also calculates a regulation opening degree of the target throttle opening degree appropriately based on the input signals from the accelerator-opening-degree calculation unit 11, the intake-pressure calculation unit 12, the engine-temperature calculation unit 13, the vehicle-speed calculation unit 14, the center-stand-state detection unit 15, the engine-rotational-speed calculation unit 16, and the throttle-opening-degree calculation unit 17. The regulation opening degree of the target throttle opening degree is an opening degree upper limit of the target throttle opening degree to cause the rotational speed of the engine 2 to fall within a range of a rotational speed that enables to keep the centrifugal clutch 5 in the disconnection state. The target throttle-opening-degree calculation unit 19 outputs a signal indicating the calculated target throttle opening degree to the deviation calculation unit 20.

The deviation calculation unit 20 calculates a deviation between the actual throttle opening degree indicated by the signal input from the throttle-opening-degree calculation unit 17 and the target throttle opening degree indicated by the signal input from the target throttle-opening-degree calculation unit 19 and outputs a signal indicating the calculated deviation to the throttle-opening-degree F/B control unit 21.

The throttle-opening-degree F/B control unit 21 outputs a control signal to the motor-drive output unit 22 to cause the actual throttle opening degree to become the target throttle opening degree based on the deviation indicated by the signal input from the deviation calculation unit 20.

The motor-drive output unit 22 outputs a drive signal for driving the throttle valve 8 to a motor M according to the control signal input from the throttle-opening-degree F/B control unit 21. In this case, a throttle system including the electronic-control throttle control unit C composed of the target throttle-opening-degree calculation unit 19, the deviation calculation unit 20, and the throttle-opening-degree F/B control unit 21, the motor-drive output unit 22, the throttle valve 8, and the motor M is an electronic-control throttle system.

The electronic-control throttle control unit C of the vehicle electronic control unit 10 having the configuration as mentioned above performs a throttle-opening-degree control process described below, thereby suppressing a sudden start of the saddle-ride type vehicle 1 or a deterioration of a catalyst. A flow of the throttle-opening-degree control process performed by the electronic-control throttle control unit C of the vehicle electronic control unit 10 according to the present embodiment is explained below with reference to FIGS. 3A to 4E.

### [Throttle-opening-degree control process]

FIG. 3A is a flowchart showing a flow of a throttle-opening-degree control process performed by the vehicle electronic control unit according to the present embodiment, and FIG. 3B is a control map showing a relation between engine temperatures that can be used in the flowchart of FIG. 3A and regulation opening degrees TRGSSL of a target throttle opening degree for suppressing an engine rotational speed within a predetermined range. FIGS. 4A to 4E are timing charts for explaining a flow of a throttle-opening-degree control process performed by the vehicle electronic control unit according to the present embodiment, where FIG. 4A shows changes with respect to a time axis in a target throttle opening degree TRG and a regulation opening degree TRGSSL thereof, FIG. 4B shows changes with respect to a time axis in an accelerator opening degree AP, FIG. 4C shows changes with respect to a time axis in an engine rotational speed NE, FIG. 4D shows changes with respect to a time axis in an engine temperature TW, and FIG. 4E shows changes with respect to a time axis in a working state SS of a center stand. Specific times in FIGS. 4A to 4E are representatively shown in FIG. 4E.

As shown in the flowchart of FIG. 3A, the throttle-opening-degree control process according to the present embodiment is started at a timing when the engine 2 is started and then the throttle-opening-degree control process advances to a process at Step S1.

In the process at Step S1, the electronic-control throttle control unit C performs an initialization process of resetting parameters that are to be reset among those calculated in the throttle-opening-degree control process or the like. The process at Step S1 is thereby completed and the throttle-opening-degree control process advances to a process at Step S2.

In the process at Step S2, the accelerator-opening-degree calculation unit 11 calculates the accelerator opening degree AP and a change amount DAP thereof based on an output signal from the accelerator opening degree sensor 31 and outputs a signal indicating the accelerator opening degree AP and the calculated change amount DAP to the fuel-ignition-timing control unit 18 and the target throttle-opening-degree calculation unit 19. The process at Step S2 is thereby completed and the throttle-opening-degree control process advances to a process at Step S3.

As shown in FIG. 4B, the accelerator opening degree AP calculated in the process at Step S2 shows changes with time according to opening/closing operations of an accelerator operating member such as an accelerator grip by the driver of the saddle-ride type vehicle 1 after a time t=0.

In the process at Step S3, the target throttle-opening-degree calculation unit 19 calculates a target throttle opening degree TRG (TRG of a drive by wire) appropriately based on input signals from the intake-pressure calculation unit 12, the engine-temperature calculation unit 13, the vehicle-speed calculation unit 14, the center-stand-state detection unit 15, the engine-rotational-speed calculation unit 16, and the throttle-opening-degree calculation unit 17, in addition to the input signal indicating the accelerator opening degree AP and the change amount DAP thereof from the accelerator-opening-degree calculation unit 11. The process at Step S3 is thereby completed and the throttle-opening-degree control process advances to a process at Step S4.

As shown in FIG. 4A, the target throttle opening degree TRG calculated in the process at Step S3 shows changes with time according to the changes with time of the accelerator opening degree AP and the change amount DAP thereof after the time t=0.

In the process at Step S4, the center-stand-state detection unit 15 detects a working state (the standing state or the retracting state) SS of the center stand 6 based on an output signal from the center-stand-state detection switch S and inputs a signal indicating the working state SS of the detected center stand 6 to the fuel-ignition-timing control unit 18 and the target throttle-opening-degree calculation unit 19. The process at Step S4 is thereby completed and the throttle-opening-degree control process advances to a process at Step S5.

As shown in FIG. 4E, the working state SS of the center stand 6 detected in the process at Step S4 shows changes with time according to operations of the center stand 6 by the driver of the saddle-ride type vehicle 1 after the time t=0.

In the process at Step S5, the target throttle-opening-degree calculation unit 19 discriminates whether the working state SS of the center stand 6 can be detected in the process at Step S4. When a result of the discrimination indicates that the working state SS of the center stand 6 can be detected, the electronic-control throttle control unit C controls the throttle-opening-degree control process to advance to a process at Step S6. When the working state SS of the center stand 6 cannot be detected, the electronic-control throttle control unit C controls the throttle-opening-degree control process to advance to a process at Step S14.

In the process at Step S6, the target throttle-opening-degree calculation unit 19 discriminates whether the working state SS of the center stand 6 detected in the current process is the standing state. When a result of the discrimination indicates that the working state SS of the center stand 6 detected in the current process is the standing state, the electronic-control throttle control unit C controls the throttle-opening-degree control process to advance to a process at Step S7. When the working state SS of the center stand 6 detected in the current process is not the standing state but the retracting state, the electronic-control throttle control unit C controls the throttle-opening-degree control process to advance to a process at Step S10.

As shown in FIG. 4E, a section in which the working state SS of the center stand 6 discriminated in the process at Step S6 is the standing state corresponds to a section from the time t=0 to a time t=t5 and a section from a time t=t6 to a time t=t9 while a section in which the working state SS of the center stand 6 is the retracting state corresponds to a section from the time t=t5 to the time t=t6.

In the process at Step S7, the target throttle-opening-degree calculation unit 19 calculates a regulation opening degree TRGSSL for suppressing the rotational speed NE of the engine 2 within the predetermined range. The regulation opening degree TRGSSL of the target throttle opening degree is an opening degree upper limit of the target throttle opening degree TRG for causing the rotational speed NE of the engine 2 to fall within a range of a rotational speed that enables the centrifugal clutch 5 to keep the disconnected state.

As the temperature TW of the engine 2 increases, the temperature of grease in the belt-type continuously variable transmission 4 also increases and an operating friction of an internal mechanism thereof is likely to reduce . Accordingly, as the temperature TW of the engine 2 increases, the rotational speed of the drive plate 4d easily increases when the rotational speed NE of the engine 2 increases. Furthermore, as the temperature TW of the engine 2 increases, the combustion state is stabilized and the temperature of oil therein also increases, whereby a rotational friction of the engine 2 is likely to reduce. Therefore, as the temperature TW of the engine 2 increases, a pickup at which the rotational speed NE of the engine 2 increases according to the opening operation of the accelerator operating member by the driver becomes sharp, and a rise rate in the rotational speed NE of the engine 2 becomes higher even when the same accelerator opening degree AP and the same change amount DAP thereof are provided. Accordingly, to more strictly suppress the rotational speed NE of the engine 2 within a range of a rotational speed that enables the centrifugal clutch 5 to keep the disconnected state, it is preferable that also the regulation opening degree TRGSSL is set high when the temperature TW of the engine 2 is low and is set lower as the temperature TW of the engine 2 becomes higher.

Specifically, for example, control data such as a map indicating the regulation opening degree TRGSSL that is set high when the temperature TW of the engine 2 is low and is set lower as the temperature TW of the engine 2 becomes higher as shown in FIG. 3B is stored in a memory. It is preferable that the map or the like is read from the memory to search for a value of the regulation opening degree TRGSSL corresponding to the temperature TW of the engine 2 in the current process and set the value as the regulation opening degree TRGSSL in the process at Step S7. In this way, the rotational speed NE of the engine 2 that enables the centrifugal clutch 5 to keep the disconnected state can be realized according to the temperature TW of the engine 2.

The process at Step S7 is completed and the throttle-opening-degree control process advances to a process at Step S8.

As shown in FIG. 4A, the regulation opening degree TRGSSL calculated in the process at Step S7 shows changes with time according to the changes with time in the temperature TW of the engine 2 as shown in FIG. 4D after the time t=0. This corresponds to characteristics of the regulation opening degree TRGSSL shown in FIG. 3B, which is set high when the temperature TW of the engine 2 is low and is set lower as the temperature TW of the engine 2 becomes higher.

In the process at Step S8, the target throttle-opening-degree calculation unit 19 discriminates whether the accelerator operating member is operated to an opening side, that is, whether the throttle valve 8 is driven to an opening side based on the change amount DAP of the accelerator opening degree AP calculated in the process at Step S2. When a result of the discrimination indicates that the accelerator operating member is operated to the opening side, that is, the throttle valve 8 is driven to the opening side, the electronic-control throttle control unit C controls the throttle-opening-degree control process to advance to a process at Step S9. When the accelerator operating member is operated to a closing side, that is, the throttle valve 8 is driven to a closing side, the electronic-control throttle control unit C controls the throttle-opening-degree control process to advance to a process at Step S13.

In the process at Step S9, the target throttle-opening-degree calculation unit 19 adjusts the target throttle opening degree TRG to cause a change rate of the opening degree of the throttle valve 8, that is, the actual throttle opening degree to be small (slow) with respect to the change rate of the accelerator opening degree AP (the change amount DAP: the output change rate of the accelerator opening degree sensor 31) according to the change amount DAP of the accelerator opening degree AP calculated in the process at Step S2 to prevent the rotational speed NE of the engine 2 from undesirably rapidly increasing. The process at Step S9 is thereby completed and the throttle-opening-degree control process advances to a process at Step S13.

As shown in FIG. 4A, sections in which the target throttle opening degree TRG is adjusted to cause the change rate of the actual throttle opening degree to be slow in the process at Step S9 are a section from a time t=t1 to a time t=t2, a section from a time t=t3 to a time before a time t=t4, and a section from a time t=t7 to a time t=t8, in which the change amount DAP becomes large due to an increase in the accelerator opening degree AP. Here, In FIG. 4A, the target throttle opening degree TRG before the adjustment to cause the change rate of the actual throttle opening degree to be slow is performed is shown by a broken line.

In the process at Step S10, the center-stand-state detection unit 15 discriminates whether the working state SS of the center stand 6 detected in the previous process is the standing state. The working state SS of the center stand 6 detected in the previous process and stored in the memory is read and used. When a result of the discrimination indicates that the working state SS of the center stand 6 detected in the previous process is the standing state, the electronic-control throttle control unit C controls the throttle-opening-degree control process to advance to a process at Step S11. When the working state SS of the center stand 6 detected in the previous process is not the standing state but the retracting state, the electronic-control throttle control unit C controls the throttle-opening-degree control process to advance to the process at Step S14.

In the process at Step S11, the target throttle-opening-degree calculation unit 19 calculates the regulation opening degree TRGSSL by an identical method to that in the process at Step S7 and also discriminates whether the target throttle opening degree TRG has reached the regulation opening degree TRGSSL. As the regulation opening degree TRGSSL, a value calculated in the previous process and stored in the memory can be read and used for convenience. When a result of the discrimination indicates that the target throttle opening degree TRG has reached the regulation opening degree TRGSSL, the electronic-control throttle control unit C controls the throttle-opening-degree control process to advance to the process at Step S14. When the target throttle opening degree TRG has not reached the regulation opening degree TRGSSL of the previous process, the electronic-control throttle control unit C controls the throttle-opening-degree control process to advance to a process at Step S12.

In the process at Step S12, the target throttle-opening-degree calculation unit 19 adjusts the regulation opening degree TRGSSL to gradually increases it to gradually relax a regulation on the target throttle opening degree TRG according to the regulation opening degree TRGSSL so as to enable the actual throttle opening degree as the opening degree of the throttle valve 8 to be controlled by the throttle-opening-degree F/B control unit 21 and to become the target throttle opening degree TRG that is not regulated by the regulation opening degree TRGSSL. This control is executed considering that an acceleration of the saddle-ride type vehicle 1 by the driver is allowed because the saddle-ride type vehicle 1 will be usually brought to an accelerated state when the working state SS of the center stand 6 is changed to the retracting state in the current process and the target throttle opening degree TRG has not reached the regulation opening degree TRGSSL. Furthermore, the gradual relaxing of the regulation on the target throttle opening degree TRG according to the regulation opening degree TRGSSL is performed considering that this is preferable to suppress a rapid acceleration of the saddle-ride type vehicle 1 while reducing an uncomfortable feeling of the driver at that time. The process at Step S12 is thereby completed and the throttle-opening-degree control process advances to a process at Step S13.

In the process at Step S13, the target throttle-opening-degree calculation unit 19 regulates the target throttle opening degree TRG according to the regulation opening degree TRGSSL. The process at Step S13 is thereby completed and the throttle-opening-degree control process returns to the process at Step S2. The throttle-opening-degree control process of this time ends at a timing when the engine 2 is stopped.

As shown in FIG. 4A, the target throttle opening degree TRG regulated by the regulation opening degree TRGSSL in the process at Step S13 appears in a section across the time t=t4 and a section from the time t=t8 to a time before the time t=t9. In FIG. 4A, an example of a case where the process at Step S13 is reached through the processes from Step S7 to Step S9 is shown and an example of a case where the process at Step S13 is reached through the processes from Step S10 to Step S12 is not shown.

Accordingly, the rotational speed NE of the engine 2 falls within a range of a rotational speed that enables the centrifugal clutch 5 to keep the disconnected state in the section from the time t=t0 to the time t=t5 and the section after the time t=t6, as shown in FIG. 4C.

In the process at Step S14, the target throttle-opening-degree calculation unit 19 prohibits (cancels) the regulation on the target throttle opening degree TRG according to the regulation opening degree TRGSSL to prioritize an acceleration of the saddle-ride type vehicle 1 by the driver. The process at Step S14 is thereby completed and the throttle-opening-degree control process returns to the process at Step S2.

As shown in FIG. 4A, a section in which the regulation on the target throttle opening degree TRG according to the regulation opening degree TRGSSL is prohibited in the process at Step S14 corresponds to a section from the time t=t5 to the time t=t6 and the target throttle opening degree TRG is not regulated according to the regulation opening degree TRGSSL in this section. In FIG. 4A, an example of a case where the process at Step S14 is reached through the processes from Step S10 to Step S11 is shown and examples of a case where the process at Step S14 is reached directly from the process at Step S5 and a case where the process at Step S14 is reached directly from the process at Step S10 are not shown.

As is clear from the above explanations, in the throttle-opening-degree control process performed by the vehicle electronic control unit 10 according to the present embodiment, the target throttle-opening-degree calculation unit 19 of the electronic-control throttle control unit C regulates the target throttle opening degree TRG to cause the rotational speed NE of the engine 2 to fall within a range of a rotational speed that enables the centrifugal clutch 5 to keep the disconnected state when the state of the center stand 6 detected by the center-stand-state detection unit 15 is the standing state. Therefore, a sudden start of the saddle-ride type vehicle 1 or a deterioration of the catalyst can be suppressed. Furthermore, a situation where the driver suspects that a failure is occurring in the throttle valve 8 can be suppressed more than in a case where a regulation not to drive the throttle valve 8 is imposed.

In the throttle-opening-degree control process performed by the vehicle electronic control unit 10 according to the present embodiment, in a case where the state of the center stand 6 is the standing state, the target throttle-opening-degree calculation unit 19 of the electronic-control throttle control unit C drives the throttle valve 8 to set the change rate of the actual throttle opening degree to be slow with respect to the change amount DAP of the accelerator opening degree AP when the throttle valve 8 is driven to the opening side, and drives the throttle valve 8 to set the change rate of the actual throttle opening degree to have a value corresponding to the change amount DAP of the accelerator opening degree AP when the throttle valve 8 is driven to the closing side. Therefore, even when the throttle valve 8 is driven to the opening side in the case where the state of the center stand 6 is the standing state, an unnecessary connection of the centrifugal clutch 5 can be suppressed.

In the throttle-opening-degree control process performed by the vehicle electronic control unit 10 according to the present embodiment, in a case where the state of the center stand 6 changes from the standing state to the retracting state, the target throttle-opening-degree calculation unit 19 of the electronic-control throttle control unit C gradually relaxes the regulation on the target throttle opening degree TRG of a case where the state of the center stand 6 is the standing state. Therefore, an unnecessary rapid acceleration of the saddle-ride type vehicle 1 can be suppressed.

In the throttle-opening-degree control process performed by the vehicle electronic control unit 10 according to the present embodiment, the target throttle-opening-degree calculation unit 19 of the electronic-control throttle control unit C cancels the regulation on the target throttle opening degree TRG in a case where the center-stand-state detection unit 15 cannot detect the state of the center stand 6. Therefore, it is possible to suppress a situation where the saddle-ride type vehicle 1 cannot be started under a circumstance in which whether the center stand 6 is standing or the center-stand-state detection unit 15 is broken cannot be determined.

Furthermore, in the throttle-opening-degree control process performed by the vehicle electronic control unit 10 according to the present embodiment, the regulation opening degree TRGSSL that regulates the target throttle opening degree TRG is set to change according to the temperature TW of the engine 2. Therefore, an unnecessary connection of the centrifugal clutch 5 caused by a reduction in a friction of the centrifugal clutch 5 with a reduction in viscosities of oils and fats can be suppressed.

In the present invention, the type, the arrangement, the number, and the like of the constituent elements are not limited to those in the embodiment explained above, and it is needless to mention that the constituent elements can be modified as appropriate without departing from the scope of the invention, such as appropriately replacing these elements by other ones having identical operational effects.

As described above, the present invention can provide a vehicle electronic control unit capable of suppressing a sudden start of a saddle-ride type vehicle or a deterioration of a catalyst. Therefore, because of its general purposes and universal characteristics, applications of the present invention can be expected in a wide range in the field of an electronic control unit for a vehicle such as a motorcycle.

In a vehicle electronic control unit 10, a target throttle-opening-degree calculation unit 19 of an electronic-control throttle control unit C regulates a target throttle opening degree TRG to cause a rotational speed NE of an engine 2 to fall within a range of a rotational speed that enables a centrifugal clutch 5 to keep a disconnected state when a state of a center stand 6 detected by a center-stand-state detection unit 15 is a standing state.

## Claims

1. A vehicle electronic control unit (10) applied to a saddle-ride type vehicle (1) having a belt-type continuously variable transmission (4) and a centrifugal clutch (5) for transmitting a driving force of an engine (2) to a driving wheel (3), the vehicle electronic control unit comprising:
an electronic-control throttle control unit (C) that calculates a target throttle opening degree (TRG) based on an output of an accelerator opening degree sensor (11) and executes a feedback control to cause an opening degree of a throttle valve (8) to match the target throttle opening degree (TRG); and
a stand-state detection unit (S) that detects a working state of a stand (6) for supporting the saddle-ride type vehicle (1),
wherein the electronic-control throttle control unit (C) regulates the target throttle opening degree (TRG) to cause a rotational speed (NE) of the engine (2) to fall within a range of a rotational speed that enables the centrifugal clutch (5) to keep a disconnected state when the working state of the stand (6) detected by the stand-state detection unit (S) is a standing state supporting the saddle-ride type vehicle (1),
**characterized in that** in a case where the working state of the stand (6) detected by the stand-state detection unit (S) is the standing state, the electronic-control throttle control unit (C) drives the throttle valve (8) to set a change rate of an actual throttle opening degree (TOD) with respect to an output change rate of the accelerator opening degree sensor (11) to be slow when the throttle valve (8) is driven to an opening side, and drives the throttle valve (8) to set the change rate of the actual throttle opening degree (TOD) to a rate corresponding to the output change rate of the accelerator opening degree sensor (11) when the throttle valve (8) is driven to a closing side.

2. The vehicle electronic control unit (10) according to claim 1, wherein in a case where the working state of the stand (6) detected by the stand-state detection unit (S) changes from the standing state to a retracting state not supporting the saddle-ride type vehicle (1), the electronic-control throttle control unit (C) gradually relaxes a regulation on the target throttle opening degree (TRG) of a time when the working state of the stand (6) detected by the stand-state detection unit (S) is the standing state.

3. The vehicle electronic control unit (10) according to claim 1 or 2, wherein the electronic-control throttle control unit (C) cancels the regulation on the target throttle opening degree (TRG) when the stand-state detection unit (S) cannot detect the working state of the stand (6).

4. The vehicle electronic control unit according to any of claims 1 to 3, wherein a regulation opening degree (TRGSSL) that regulates the target throttle opening degree (TRG) is set to change according to a temperature of the engine (2).

## Patentansprüche

1. Elektronische Fahrzeugsteuerungseinheit (10) zur Anwendung auf ein Aufsitzsattel-Fahrzeug (1) mit einen stufenlos verstellbaren Riemengetriebe (4) und einer Zentrifugalkupplung (5) zur Übertragung einer Antriebskraft eines Motors (2) auf ein Antriebsrad (3), wobei die elektronische Fahrzeugsteuerungseinheit aufweist:
eine elektronische Drosselsteuerungseinheit (C), die einen Soll-Drosselöffnungsgrad (TFG) basierend auf einer Ausgabe eines Akzelerator-Stellungsgradsensors (11) berechnet und eine Rückkopplungsregelung ausführt, um zu veranlassen, dass ein Öffnungsgrad eines Drosselventils (8) zu dem Soll-Drosselöffnungsgrad (TRG) passt; und
eine Ständer-Zustand-Detektionseinheit (S), die einen Arbeitszustand eines Ständers (6) zum Stützen des Aufsitzsattel-Fahrzeugs (1) detektiert,
wobei die elektronische Drosselsteuerungseinheit (C) den Soll-Drosselöffnungsgrad (TRG) reguliert, um zu veranlassen, dass eine Drehzahl (NE) des Motors (2) in einen Drehzahlbereich fällt, der ermöglicht, dass die Zentrifugalkupplung (5) einen getrennten Zustand beibehält, wenn der von der Ständer-Zustand-Detektionseinheit (S) detektierte Arbeitszustand des Ständers (6) in einem das Aufsitzsattel-Fahrzeug (1) stützenden stehenden Zustand ist,
**dadurch gekennzeichnet, dass** in einem Fall, in dem der von der Ständer-Zustand-Detektionseinheit (S) detektierte Arbeitszustand des Ständers (6) der stehende Zustand ist, die elektronische Drosselsteuerungseinheit (C) das Drosselventil (8) antreibt, um eine Änderungsrate eines Ist-Drosselöffnungsgrads (TOD) in Bezug auf eine Ausgabe-Änderungsrate des Akzelerator-Stellungsgradsensors (11) auf Langsam zu stellen, wenn das Drosselventil (8) zur Öffnungsseite hin angetrieben wird, und das Drosselventil (8) antreibt, um die Änderungsrate des Ist-Drosselungsöffnungsgrad (TOD) auf eine der Ausgabe-Änderungsrate des Akzelerator-Stellungsgradsensors (11) entsprechenden Rate zu stellen, wenn das Drosselventil (8) zur Schließseite hin angetrieben wird.

2. Die elektronische Fahrzeugsteuerungseinheit (10)nach Anspruch 1, wobei in einem Fall, in dem sich der von der Ständer-Zustand-Detektionseinheit (S) detektierte Arbeitszustand des Ständers (6) von dem stehenden Zustand zu einem eingeklappten Zustand, der das Aufsitzsattel-Fahrzeug (1) nicht stützt, ändert, die elektronische Drosselsteuerungseinheit (C) eine Regulierung am Soll-Drosselöffnungsgrad (TRG) einer Zeit, wenn der von der Ständer-Zustand-Detektionseinheit (S) detektierte Arbeitszustand des Ständers (6) der stehende Zustand ist, allmählich nachlässt.

3. Die elektronische Fahrzeugsteuerungseinheit (10) nach Anspruch 1 oder 2, wobei die elektronische Drosselsteuerungseinheit (C) die Regulierung an dem Soll-Drosselöffnungsgrad (TRG) aufhebt, wenn die Ständer-Zustand-Detektionseinheit (S) den Arbeitszustand des Ständers (6) nicht detektieren kann.

4. Die elektronische Fahrzeugsteuerungseinheit (10) nach einem der Ansprüche 1 bis 3, wobei ein Regulierungsöffnungsgrad (TRGSSL), der den Soll-Drosselöffnungsgrad (TRG) reguliert, eingestellt wird, um sich gemäß einer Temperatur des Motors (2) zu ändern.

## Revendications

1. Unité de commande électronique de véhicule (10) appliquée à un véhicule du type à selle (1) comportant une transmission à variation continue du type à courroie (4) et un embrayage centrifuge (5) permettant de transmettre une force d'entraînement d'un moteur (2) à une roue motrice (3), l'unité de commande électronique de véhicule comprenant :
une unité de commande de papillon par commande électronique (C) qui calcule un degré d'ouverture cible de papillon (TRG) sur la base d'une sortie de capteur de degré d'ouverture d'accélérateur (11) et qui exécute une commande à rétroaction pour faire qu'un degré d'ouverture de papillon des gaz (8) concorde avec le degré d'ouverture cible de papillon (TRG) ; et
une unité de détection d'état de béquille (S) qui détecte un état de fonctionnement d'une béquille (6) destinée à supporter le véhicule du type à selle (1),
dans laquelle l'unité de commande de papillon par commande électronique (C) régule le degré d'ouverture cible de papillon (TRG) pour situer une vitesse de rotation (NE) du moteur (2) dans une plage de vitesse de rotation qui permet à l'embrayage centrifuge (5) de maintenir un état désaccouplé lorsque l'état de fonctionnement de la béquille (6) détecté par l'unité de détection d'état de béquille (S) est un état de béquillage dans lequel la béquille supporte le véhicule du type à selle (1),
**caractérisée en ce que** dans un cas où l'état de fonctionnement de la béquille (6) détecté par l'unité de détection d'état de béquille (S) est l'état de béquillage, l'unité de commande de papillon par commande électronique (C) entraîne le papillon des gaz (8) pour régler une vitesse de variation d'un degré d'ouverture réel de papillon (TOD) par rapport à une vitesse de variation de sortie du capteur de degré d'ouverture d'accélérateur (11) pour qu'elle soit lente, lorsque le papillon des gaz (8) est entraîné vers un côté d'ouverture, et entraîne le papillon des gaz (8) pour régler la vitesse de variation du degré d'ouverture réel de papillon (TOD) à une vitesse correspondant à la vitesse de variation de sortie du capteur de degré d'ouverture d'accélérateur (11), lorsque le papillon des gaz (8) est entraîné vers un côté de fermeture.

2. Unité de commande électronique de véhicule (10) selon la revendication 1, dans laquelle dans un cas où l'état de fonctionnement de la béquille (6) détecté par l'unité de détection d'état de béquille (S) passe de l'état de béquillage à un état de débéquillage dans lequel la béquille ne supporte pas le véhicule du type à selle (1), l'unité de commande de papillon par commande électronique (C) relâche progressivement une régulation du degré d'ouverture cible de papillon (TRG) propre à un moment où l'état de fonctionnement de la béquille (6) détecté par l'unité de détection d'état de béquille (S) est l'état de béquillage.

3. Unité de commande électronique de véhicule (10) selon la revendication 1 ou 2, dans laquelle l'unité de commande de papillon par commande électronique (C) annule la régulation du degré d'ouverture cible de papillon (TRG) lorsque l'unité de détection d'état de béquille (S) ne peut pas détecter l'état de fonctionnement de la béquille (6).

4. Unité de commande électronique de véhicule selon l'une quelconque des revendications 1 à 3, dans laquelle un degré d'ouverture de régulation (TRGSSL) qui régule le degré d'ouverture cible de papillon (TRG) est réglé pour varier en fonction d'une température du moteur (2).
